(19) Europäisches Patentamt
European Patent Office
Office européen des brevets

(11) **EP 1 491 015 B1**

(12) **EUROPÄISCHE PATENTSCHRIFT**

(45) Veröffentlichungstag und Bekanntmachung des Hinweises auf die Patenterteilung:
**01.10.2008 Patentblatt 2008/40**

(21) Anmeldenummer: **03709636.9**

(22) Anmeldetag: **21.02.2003**

(51) Int Cl.:
**H04L 25/06** *(2006.01)*

(86) Internationale Anmeldenummer:
**PCT/DE2003/000546**

(87) Internationale Veröffentlichungsnummer:
**WO 2003/085917 (16.10.2003 Gazette 2003/42)**

(54) **EINRICHTUNG UND VERFAHREN ZUR GEREGELTEN SKALIERUNG UND QUANTISIERUNG VON SOFT-OUTPUT-WERTEN EINES ENTZERRERS**

DEVICE AND METHOD FOR THE CONTROLLED SCALING AND QUANTIZATION OF SOFT OUTPUT VALUES OF AN EQUALIZER

DISPOSITIF ET PROCEDE DE MISE A L'ECHELLE ET DE QUANTIFICATION REGULEES DE VALEURS DE SORTIE LOGICIELLES D'UN EGALISEUR

(84) Benannte Vertragsstaaten:
**DE FR GB**

(30) Priorität: **04.04.2002 DE 10214908**

(43) Veröffentlichungstag der Anmeldung:
**29.12.2004 Patentblatt 2004/53**

(73) Patentinhaber: **Infineon Technologies AG**
**81669 München (DE)**

(72) Erfinder: **KRÜGER, Martin**
**80995 München (DE)**

(74) Vertreter: **Graf Lambsdorff, Matthias**
**Patentanwälte**
**Lambsdorff & Lange**
**Dingolfinger Strasse 6**
**81673 München (DE)**

(56) Entgegenhaltungen:
**US-B1- 6 347 124**

• **LEE Y K ET AL: "Normalization, windowing and quantization of soft-decision Viterbi decoder inputs in CDMA systems" VEHICULAR TECHNOLOGY CONFERENCE, 1999 IEEE 49TH HOUSTON, TX, USA 16-20 MAY 1999, PISCATAWAY, NJ, USA,IEEE, US, 16. Mai 1999 (1999-05-16), Seiten 221-225, XP010341929 ISBN: 0-7803-5565-2**
• **MONTORSI, BENEDETTO: "Design of Fixed-Point Iterative Decoders for Concatenated Codes With Interleavers" IEEE JOURNAL ON SELECTED AREAS IN COMMUNICATIONS, [Online] Bd. 19, Nr. 5, Mai 2001 (2001-05), Seiten 871-882, XP002246708 Gefunden im Internet: <URL:http://www.cercom.polito.it/Publication/Pdf/76.pdf> [gefunden am 2003-07-07]**

**Beschreibung**

Die Erfindung betrifft eine Vorrichtung und ein Verfahren, mittels welcher eine geregelte Skalierung und Quantisierung von digitalen Soft-Output-Werten eines Entzerrers durchführbar sind.

Beim Mobilfunk liegt an der Antenne des Mobilfunkempfängers eine elektromagnetische Welle an. Die elektromagnetische Welle enthält ein durch faltungskodierte Informations- und Paritätsbits moduliertes hochfrequentes Signal. Die Antenne wandelt die elektromagnetische Welle in elektrische Signale um. Die elektrischen Signale werden durch Multiplikation mit kohärenten Trägern in das Basisband umgesetzt. Durch Bandfilterung wird das hochfrequente Signal aus mehreren Kanälen herausgefiltert und durch zeitliche Fensterung wird es aus dem Zeitmultiplex selektiert. Ferner wird das hochfrequente Signal während der beschriebenen Umsetzung digitalisiert. Mit einem Entzerrer werden aus dem Empfangssignal die übertragenen kanalkodierten Datenbits $b_k$ abgeschätzt, welche anschließend in einem Kanaldekodierer dekodiert werden. Entzerrer und Kanaldekodierer dienen dazu, Signalverzerrungen und fehlerhafte Bits, welche in dem ausgesendeten Signal bei der Übertragung über einen Kanal erzeugt werden, sowie punktierte Bits aus dem empfangenen Signal wieder herauszurechnen. Mit dem bekannten Viterbi-Algorithmus steht ein leistungsfähiges und vielbenutztes Rechenverfahren zur Verfügung, welches sowohl für die Entzerrung als auch für die Kanaldekodierung eingesetzt werden kann.

Speziell bei der Entzerrung hat es sich als vorteilhaft erwiesen, zusätzlich zu den entzerrten Datenbits $b_k$ Fehlerwahrscheinlichkeiten $p_k$ zu schätzen. Jedem Datenbit $b_k$ ist eine Fehlerwahrscheinlichkeit $p_k$ zugeordnet. Die der Entzerrung nachfolgende Kanaldekodierung wird bei Verwendung der Fehlerwahrscheinlichkeiten $p_k$ deutlich verbessert.

Die Fehlerwahrscheinlichkeiten $p_k$ müssen zwischengespeichert werden, sofern sie im GSM-Dienst EGPRS (Enhanced General Packed Radio Service) im Sinne einer "incremental redundancy" erneut verwendet werden sollen. Dabei werden fehlerhaft empfangene Datenbits $b_k$ erneut und mit gleicher oder anderer Punktierung übertragen, wodurch die Redundanz erhöht wird.

Die Fehlerwahrscheinlichkeiten $p_k$ werden in Form von sogenannten Soft-Output-Werten $s_k$ gespeichert. Die Soft-Output-Werte $s_k$ lassen sich aus den Fehlerwahrscheinlichkeiten $p_k$ folgendermaßen errechnen:

$$s_k \;=\; \ln\!\left(\frac{1}{p_k} - 1\right) \tag{1}$$

Für den Fall, dass der Entzerrer keine Aussage über das empfangene Datenbit $b_k$ machen kann, ist die Fehlerwahrscheinlichkeit $p_k$ gleich 0,5 und der zugehörige Soft-Output-Wert $s_k$ ist gleich 0. Für den Fall, dass gute Übertragungsbedingungen vorliegen und die Fehlerwahrscheinlichkeit $p_k$ demzufolge den Wert 0 annimmt, wird der zugehörige Soft-Output-Wert $s_k$ unendlich groß bzw. erreicht in einem realen digitalen System einen Sättigungswert. Für den Fall, dass die Fehlerwahrscheinlichkeit $p_k$ größer als 0,5 ist, wird der zugehörige Soft-Output-Wert $s_k$ negativ. In diesem Fall ist es wahrscheinlicher, dass anstelle des Datenbits $b_k$ das Datenbit $1-b_k$ ausgesendet wurde. Dieser Fall soll im Folgenden jedoch nicht betrachtet werden.

Über Datenbits $b_k$, die nach der Faltungskodierung punktiert wurden, kann der Entzerrer keine Aussage machen. Diesen Datenbits $b_k$ wird vor der Kanaldekodierung jeweils ein Soft-Output-Wert $s_k$ von 0 zugewiesen, sodass sie ohne Bedeutung für den Kanaldekodierer sind.

Kanalkodierte Datenbits $b_k$ werden zusammen mit ihren Soft-Output-Werten $s_k$ in dem Kanaldekodierer dekodiert. Ohne die Soft-Output-Werte $s_k$ wäre die Leistungsfähigkeit des Kanaldekodierers stark eingeschränkt. Die dekodierten Datenbits enthalten ein Prüfsummenwort, mit dessen Hilfe durch eine Konsistenzprüfung festgestellt werden kann, ob die übertragenen und entfalteten Datenbits fehlerfrei sind. Wird die Fehlerfreiheit festgestellt, so wird der Datenblock weitergegeben. Ansonsten wird auf eine Modulationsart und Kanalkodierung (MCS; Modulation and Coding Scheme) niedrigerer Ordnung umgeschaltet, oder der Datenblock wird erneut gesendet. Die erneute Anforderung des Datenblocks kann auch mehrfach wiederholt werden. Die mehrfach empfangenen Datenbits $b_k$ und ihre Soft-Output-Werte $s_k$ werden in geeigneter Weise kombiniert und gemeinsam entfaltet.

Der Speicherbedarf für die Speicherung der Datenbits $b_k$ und ihrer Soft-Output-Werte $s_k$ ist in integrierten Schaltungen nicht vernachlässigbar. Ein depunktierter Datenblock besteht aus 1836 Bits. Der Speicherbedarf für beispielsweise vier Datenblöcke beträgt ungefähr 60 kBit, wenn die Zahl $N_{soft}$ der Bits eines Soft-Output-Werts $s_k$ 7 beträgt. Daher ist es wünschenswert, die Soft-Output-Werte $s_k$ als ganzzahlige Soft-Output-Werte $s_{D,k}$ mit einer möglichst geringen Datenbreite zu speichern. Um den theoretisch möglichen Bereich von 0 bis unendlich als Soft-Output-Werte $s_{D,k}$ zu speichern, werden die Soft-Output-Werte $s_k$ quantisiert und gesättigt.

Jedoch wirken sich sowohl eine zu grobe Quantisierung als auch eine Sättigung auf einen zu kleinen Wertebereich schnell negativ aus. In beiden Fällen kann der Kanaldekodierer die quantisierten Soft-Output-Werte nicht angemessen bewerten. Bei sehr schlechten Übertragungsbedingungen werden durch eine zu grobe Quantisierung unter Umständen viele Datenbits $b_k$ mit Soft-Output-Werten $s_{D,k}$ gleich 0 beaufschlagt und anschließend verworfen. Bei sehr guten Übertragungsbedingungen führt eine Sättigung auf einen zu kleinen Wertebereich dazu, dass viele oder sogar alle Soft-Output-Werte $s_{D,k}$ größer als der Maximalwert $2^{N_{soft}} - 1$ sind, sodass keine Unterscheidung bezüglich der Fehlerwahrscheinlichkeit mehr möglich ist.

Es ist bekannt, zur optimalen Ausnutzung des durch die Zahl $N_{soft}$ vorgegebenen Zahlenbereichs die Soft-Output-Werte $s_k$ vor der Quantisierung mit einem Skalierungsfaktor c zu skalieren, d.h. die Soft-Output-Werte $s_k$ durch den Skalierungsfaktor c zu dividieren. Bei dem GSM-Dienst EGPRS wird der ansonsten bei diesem Dienst große Wertebereich der Soft-Output-Werte $s_k$ linear komprimiert. Allerdings wächst dadurch der Quantisierungsfehler.

Anstatt der linearen Kompression kann auch eine nichtlineare Kompression eingesetzt werden. Der Quantisierungsfehler kann dadurch in vorteilhafter Weise umverteilt werden. Beispielsweise kann die nichtlineare Kompression derart ausgeführt werden, dass der Quantisierungsfehler für kleinere Soft-Output-Werte abnimmt und für große Soft-Output-Werte zunimmt. Nachteilig an der nichtlinearen Kompression ist allerdings, dass dadurch die Eingangsgröße des Kanaldekodierers nichtlinear verzerrt wird.

In den Druckschriften "Normalization, windowing and quantization of soft-decision Viterbi decoder inputs in CDMA systems" von Y. K. Lee und H. Lou, VEHICULAR TECHNOLOGY CONFERNCE, 1999, Seiten 221 - 225, und "Design of Fixed-Point Iterative Decoders for Concatenated Codes with Interleavers" von G. Montorsi und S. Benedetto, IEEE JOURNAL ON SELECTED AREAS IN COMMUNICATIONS, Bd. 19, 2001, Seiten 871 - 882, werden Verfahren zur Skalierung und Quantisierung von Soft-Output-Werten vorgestellt. Des Weiteren befasst sich auch die US-Patentschrift US 6,347,124 B1 mit der Skalierung von Soft-Output-Werten.

Aufgabe der Erfindung ist es daher, eine aufwandsgünstige Vorrichtung zur Skalierung und Quantisierung von digitalen Soft-Output-Werten eines Entzerrers zu schaffen, welche es ermöglicht, die skalierten und quantisierten Soft-Output-Werte mit einem möglichst kleinen Fehler und mit möglichst geringer Datenbreite zu erzeugen. Ferner soll ein entsprechendes Verfahren angegeben werden. Insbesondere sollen die Einrichtung und das Verfahren für einen EDGE (Enhanced Data Services for GSM-Evolutions)-Mobilfunkempfänger verwendbar sein.

Die der Erfindung zugrunde liegende Aufgabenstellung wird durch die Merkmale der unabhängigen Patentansprüche gelöst. Vorteilhafte Weiterbildungen und Ausgestaltungen der Erfindung sind in den Unteransprüchen angegeben.

Eine erfindungsgemäße Vorrichtung umfasst einen Entzerrer und eine Einrichtung zur Skalierung und Quantisierung von digitalen Soft-Output-Werten eines Entzerrers. Der Entzerrer gibt entzerrte Datenbits und den entzerrten Datenbits zugeordnete digitale Soft-Output-Werte aus. Die Einrichtung weist eine Regelschleife auf, welche zur Regelung eines statistischen Parameters der von der Einrichtung erzeugten, skalierten und quantisierten Soft-Output-Werte dient. Dazu umfasst die Regelschleife eine Berechnungseinheit und eine der Berechnungseinheit nachgeschaltete Regelungseinheit. Die Berechnungseinheit berechnet aus den skalierten und quantisierten Soft-Output-Werten den statistischen Parameter. Der statistische Parameter gibt einen charakteristischen Wert für die statistische Verteilung der skalierten und quantisierten Soft-Output-Werte an. Anhand des statistischen Parameters als Regelgröße führt die Regelungseinheit anschließend die Regelung durch, wobei ein Skalierungsfaktor als Stellgröße berechnet wird, welcher die Skalierung der noch unskalierten und nichtquantisierten Soft-Output-Werte des Entzerrers bestimmt.

Da der Skalierungsfaktor aus Soft-Output-Werten berechnet wird und die Soft-Output-Werte die Übertragungsqualität der Funkübertragung wiederspiegeln, ist der Skalierungsfaktor eine Funktion der Übertragungsqualität. Für gute Übertragungsbedingungen wird der Skalierungsfaktor hoch gesetzt, für schlechte Übertragungsbedingungen wird er niedrig gesetzt. Dies ist gegenüber bereits bekannten Skalierungseinrichtungen vorteilhaft, da sich die Soft-Output-Werte dadurch trotz einer möglichst geringen Datenbreite mit einem nur kleinen Fehler skalieren und quantisieren lassen.

Gegenüber einer nichtlinearen Komprimierung weist die Erfindung den weiteren Vorteil auf, dass die erfindungsgemäße Regelung wesentlich aufwandsarmer als eine üblicherweise sehr aufwändige nichtlineare arithmetische Verarbeitung der von dem Entzerrer gelieferten Soft-Output-Werte ist.

Eine bevorzugte Ausgestaltung der Erfindung sieht vor, dass die erfindungsgemäße Einrichtung eine Skalierungseinheit aufweist, welcher die digitalen Soft-Output-Werte des Entzerrers zugeführt werden und welche diese Soft-Output-Werte mit einem Skalierungsfaktor skaliert. Dazu wird die Skalierungseinheit von der Regelungseinheit beispielsweise über einen Steuereingang mit dem Skalierungsfaktor gespeist.

Eine weitere bevorzugte Ausgestaltung der Erfindung ist durch eine Quantisierungseinheit gekennzeichnet, welche die beispielsweise von der Skalierungseinheit skalierten Soft-Output-Werte quantisiert. Des Weiteren können die skalierten Soft-Output-Werte durch die Quantisierungseinheit insbesondere auch gesättigt werden. Dies bedeutet, dass der Wertebereich der Soft-Output-Werte auf einen vorgegebenen Wertebereich begrenzt wird. Beispielsweise kann die Sättigung dadurch vorgenommen werden, dass skalierte Soft-Output-Werte, welche außerhalb des vorgegebenen Wertebereichs liegen, jeweils auf den näherliegenden Grenzwert des vorgegebenen Wertebereich gesetzt werden.

Vorteilhafterweise regelt die Regelungseinheit den statistischen Parameter auf einen vorgegebenen Wert. Dazu weist die Regelungseinheit vorzugsweise einen Integral- oder einen Proportional-Integral-Regler auf.

Obgleich die Regelungseinheit wie vorstehend beschrieben derart ausgelegt sein kann, dass sie den statistischen Parameter auf einen vorgegebenen Wert regelt, kann auch vorgesehen sein, den statistischen Parameter in einen vorgegebenen Wertebereich zu regeln. Die Regelungseinheit lässt sich dann beispielsweise mittels eines sehr aufwandsarmen Zustandsautomats realisieren. Dabei kann der Skalierungsfaktor eine endliche Anzahl von diskreten Werten annehmen. Ferner sind zwei Grenzwerte, die den für den statistischen Parameter zulässigen Wertebereich begrenzen, vorgegeben. Die Arbeitsweise des Zustandsautomaten lässt sich folgendermaßen beschreiben. Sobald der statistische Parameter aus dem zulässigen Wertebereich durch die eine Grenze hinausläuft, wird der Skalierungsfaktor von seinem momentanen Wert auf den nächst höheren Wert erhöht. Sobald der statistische Parameter die andere Grenze des zulässigen Wertebereichs durchläuft, wird der statistische Parameter auf den nächst kleineren Wert erniedrigt.

Gemäß einer bevorzugten Ausgestaltung der Erfindung werden die Soft-Output-Werte nach der Skalierung und Quantisierung in einem Histogramm aufgetragen. Aus dem Histogramm wird von der Berechnungseinheit der statistische Parameter bestimmt.

Dabei kann der statistische Parameter der Mittelwert der skalierten und quantisierten Soft-Output-Werte sein. Alternativ kann es sich bei dem statistischen Parameter auch um die Bitfehlerwahrscheinlichkeit handeln. Die Bitfehlerwahrscheinlichkeit ist definiert als das Skalarprodukt aus einem Vektor, dessen Komponenten jeweils die aus dem Histogramm ermittelbare Häufigkeit eines Soft-Output-Werts $s_{D,k}$ angeben, und einem festgelegten Koeffizientenvektor. Eine weitere Realisierungsmöglichkeit für den statistischen Parameter stellt die Häufigkeit dar, mit welcher der kleinste und/oder der größte Soft-Output-Wert in dem Histogramm auftritt.

Vorzugsweise werden die Regel- und Stellgrößen der Regelschleife logarithmiert, um eine lineare Regelschleife zu erhalten. Des Weiteren kann vorteilhafterweise vorgesehen sein, dass der Skalierungsfaktor quantisiert wird.

Vorzugsweise wird die erfindungsgemäße Vorrichtung in einem Mobilfunkempfänger, insbesondere einem EDGE-Funkempfänger, implementiert. Dabei ist es möglich, neben dem statistischen Parameter weitere Parameter, welche die Übertragungsqualität wiederspiegeln, zur Bestimmung des optimalen Skalierungsfaktors heranzuziehen. Zum einen ist dies die von dem Mobilfunkempfänger empfangene Signalleistung, zum anderen ist dies die durch den Empfänger geregelte Einstellung eines Verstärkers, welcher einem Analog-Digital-Wandler zur Digitalisierung des Empfangssignals vorgeschaltet ist.

Obgleich vorgesehen ist, dass bei der Bestimmung des Skalierungsfaktors die empfangene Signalleistung und die Einstellung des dem Analog-Digital-Wandler vorgeschalteten Verstärkers zur Unterstützung des Regelkreises dienen, ist es ebenso denkbar, zu demselben Zweck nur die empfangene Signalleistung und/oder die Verstärkereinstellung ohne die Regelschleife zu verwenden.

Das erfindungsgemäße Verfahren dient zur Skalierung und Quantisierung von digitalen Soft-Output-Werten, die von einem Entzerrer generiert werden. Die Soft-Output-Werte sind entzerrten Datenbits zugeordnet, die durch Entzerren von empfangenen Signalen erzeugt werden. Dazu werden Soft-Output-Werte des Entzerrers skaliert, quantisiert und insbesondere gesättigt. Anschließend wird ein statistischer Parameter, welcher die statistische Verteilung der skalierten und quantisierten Soft-Output-Werte beschreibt, berechnet. Anhand des statistischen Parameters wird ein Skalierungsfaktor für die Skalierung weiterer von dem Entzerrer bereitgestellter Soft-Output-Werte berechnet.

Das erfindungsgemäße Verfahren berücksichtigt bei der Berechnung des Skalierungsfaktors aufgrund der Verwendung des statistischen Parameters die Übertragungsqualität der Funkverbindung. Ferner lässt sich das erfindungsgemäße Verfahren besonders aufwandsarm realisieren.

Die Erfindung wird nachfolgend anhand von Ausführungsbeispielen und unter Bezugnahme auf die Zeichnungen näher erläutert. Es zeigen:

Fig. 1    ein schematisches Schaltbild eines Ausführungsbeispiels der erfindungsgemäßen Einrichtung;

Fig. 2    ein schematisches Schaltbild eines Ausführungsbeispiels des erfindungsgemäßen Regelsystems;

Fig. 3    ein schematisches Schaltbild eines Proportional-Integral-Reglers; und

Fig. 4    ein schematisches Schaubild eines Zustandsautomats.

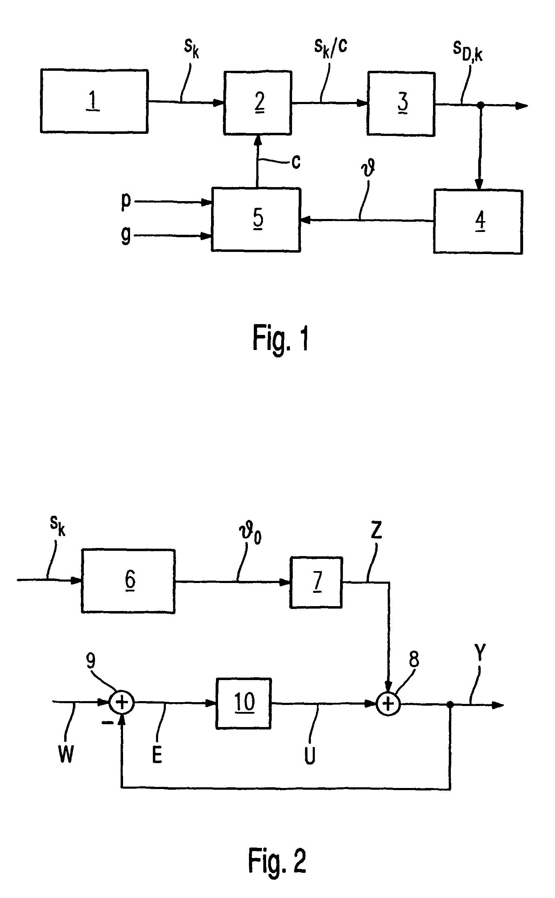

In Fig. 1 ist schematisch ein Ausführungsbeispiel der erfindungsgemäßen Einrichtung dargestellt. In einem Entzerrer sind dabei eine Berechnungseinheit 1, eine Skalierungseinheit 2 und eine Quantisierungseinheit 3 in der angegebenen Reihenfolge hintereinander geschaltet. Eine Regelschleife verbindet den Ausgang der Quantisierungseinheit 3 über eine Berechnungseinheit 4 und eine nachgeschaltete Regelungseinheit 5 mit einem Steuereingang der Skalierungseinheit 2.

In der Berechnungseinheit 1 werden Soft-Output-Werte $s_k$ berechnet, welche jeweils einem hart entschiedenen entzerrten Datenbit zugeordnet sind und für dieses Datenbit die Wahrscheinlichkeit angeben, ob es sich bei dem Datenbit um eine 0 oder eine 1 handelt. In dem vorliegenden Ausführungsbeispiel weisen die von der Berechnungseinheit 1 erzeugten Soft-Output-Werte $s_k$ eine Datenbreite von 16 bit auf. Die Soft-Output-Werte $s_k$ speisen die Skalierungseinheit 2, in welcher die Soft-Output-Werte $s_k$ durch einen Skalierungsfaktor c dividiert werden. Dadurch wird der Wertebereich der Soft-Output-Werte reduziert, und aus der Skalierungseinheit 2 werden die komprimierten Soft-Output-Werte $s_k/c$ ausgegeben. Alternativ kann auch vorgesehen sein, dass die Soft-Output-Werte $s_k$ mit einem Skalierungsfaktor multipliziert werden. Dieser wäre invers zu dem vorliegenden Skalierungsfaktor c. Die Soft-Output-Werte $s_k/c$ werden anschließend in der Quantisierungseinheit 3 quantisiert und gesättigt. Vorliegend weisen die von der Quantisierungseinheit 3 ausgegebenen Soft-Output-Werte $s_{D,k}$ eine Datenbreite von 4 bit auf. Ein weiteres Bit gibt das Vorzeichen des Soft-Output-Werts $s_{D,k}$ an. Dies bedeutet, dass die Soft-Output-Werte $s_{D,k}$ ganze Zahlen zwischen -15 und +15 annehmen können.

Ein Soft-Output-Wert $s_{D,k}$ von -15 gibt die höchste Wahrscheinlichkeit dafür an, dass das zugehörige Datenbit den Wert 1 annimmt. Entsprechend besagt ein Soft-Output-Wert $s_{D,k}$ von +15, dass das zugehörige Datensymbol mit hoher Wahrscheinlichkeit eine 0 ist. Sofern der Soft-Output-Wert $s_{D,k}$ 0 beträgt, kann keine Aussage über das zugehörige Datenbit gemacht werden.

Bei der Quantisierung und Sättigung der Soft-Output-Werte $s_k/c$ werden diejenigen Soft-Output-Werte $s_k/c$, die außerhalb der Grenzen des Wertebereichs von -15 und +15 liegen, auf den näher liegenden Grenzwert dieses Wertebereichs gesetzt. Diejenigen Soft-Output-Werte $s_k/c$, die innerhalb des angegebenen Wertebereichs liegen, bleiben bei der Quantisierung erhalten.

Die Berechnungseinheit 1, die Skalierungseinheit 2 und die Quantisierungseinheit 3 können auch durch eine Einheit ersetzt werden, welche die Funktionen der drei genannten Einheiten miteinander verknüpft und gemeinsam ausführt.

Die Soft-Output-Werten $s_{D,k}$ werden in der Berechnungseinheit 4 in einem Histogramm aufgetragen. Dabei werden die Häufigkeiten gezählt, mit denen die Soft-Output-Werte $s_{D,k}$ betragsmäßig jeweils einen der ganzzahligen Werte von 0 bis 15 annehmen. Aus dem Histogramm wird ein statistischer Parameter $\vartheta$ errechnet. Beispielsweise handelt es sich hierbei um die Häufigkeit, mit welcher der Wert 0 oder der Wert 15 angenommen wird, oder um den Mittelwert der Soft-Output-Werte $s_{D,k}$ oder um die Bitfehlerwahrscheinlichkeit. Die Bitfehlerwahrscheinlichkeit ist definiert als das Skalarprodukt aus einem 16-komponentigen Vektor, dessen Komponenten jeweils die aus dem Histogramm ermittelbare Häufigkeit eines Soft-Output-Werts $s_{D,k}$ angeben, und einem festgelegten Koeffizientenvektor.

Der statistische Parameter $\vartheta$ stellt die Regelgröße der Regelungseinheit 5 dar. Anhand dieser Regelgröße errechnet die Regelungseinheit 5 als Stellgröße den Skalierungsfaktor c, welcher den Steuereingang der Skalierungseinheit 2 speist. Genauere Funktionsweisen der Regelungseinheit 5 sind weiter unten beschrieben.

Des Weiteren können in die Regelungseinheit 5 optional auch die von dem zugehörigen Mobilfunkempfänger empfangene Signalleistung p und/oder die durch den Mobilfunkempfänger geregelte Einstellung g eines Verstärkers, der einem zur Digitalisierung des Empfangssignals ausgelegten Analog-Digital-Wandler vorgeschaltet ist, eingespeist werden. Diese beiden Größen können zusätzliche Anhaltspunkte liefern, um den Skalierungsfaktor c optimal einstellen zu können. Ferner ist es denkbar, die Regelungseinheit 5 mit der Signalleistung p und/oder der Einstellung g zu beaufschlagen und den statistischen Parameter $\vartheta$ nicht in die Regelungseinheit 5 zurückzukoppeln. In diesem Fall würde der Skalierungsfaktor c allein anhand der Signalleistung p und/oder der Einstellung g berechnet werden. Im Folgenden soll dieser Fall jedoch nicht weiter betrachtet werden.

In Fig. 2 ist ein lineares Regelsystem, durch welches sich die Erfindung realisieren lässt, detaillierter dargestellt. Soft-Output-Werte $s_k$, die noch nicht skaliert und quantisiert sind, speisen eine Berechnungseinheit 6, welche daraus einen linearen statistischen Parameter $\vartheta_0$ berechnet. In einem der Berechnungseinheit 6 nachgeschalteten Logarithmierer 7 wird durch Logarithmieren des linearen statistischen Parameters $\vartheta_0$ die Größe Z gebildet:

$$Z = \log \vartheta_0 = \log \vartheta\{s_k\} \qquad (2)$$

Die Größe Z speist einen Summationspunkt 8 und wird dort auf eine Größe U addiert, welche den negativen Logarithmus des Skalierungsfaktors c angibt:

$$U = -\log c \qquad (3)$$

Die genannte Summation liefert eine Größe Y:

$$Y = Z + U = \log \vartheta_0 - \log c = \log\left(\frac{\vartheta_0}{c}\right) \qquad (4)$$

Aufgrund der Linearität des statistischen Parameters $\vartheta$, der aus den skalierten Soft-Output-Werten $s_{D,k}$ gebildet wird, gilt bei Vernachlässigung von Quantisierung und Sättigung:

$$\vartheta(c) = \vartheta\{s_k / c\} = \vartheta_0 / c \qquad (5)$$

Daraus folgt, dass die Größe Y den Logarithmus des statistischen Parameters $\vartheta$ der skalierten Soft-Output-Werte $s_{D,k}$ angibt:

$$Y = \log \vartheta(c) = \log \vartheta \qquad (6)$$

In dem vorliegenden Regelsystem ist die Größe Y die Regelgröße und die Größe U ist die Stellgröße. Eine Größe W ist die Führungsgröße, auf welche die Größe Y geregelt werden soll. Dazu wird in einem Summationspunkt 9 eine Größe E als Regelabweichung berechnet:

$$E = W - Y \qquad (7)$$

Die Größe E speist einen Regler 10, welcher anhand der Regelabweichung den Skalierungsfaktor c berechnet und als Größe U ausgibt.

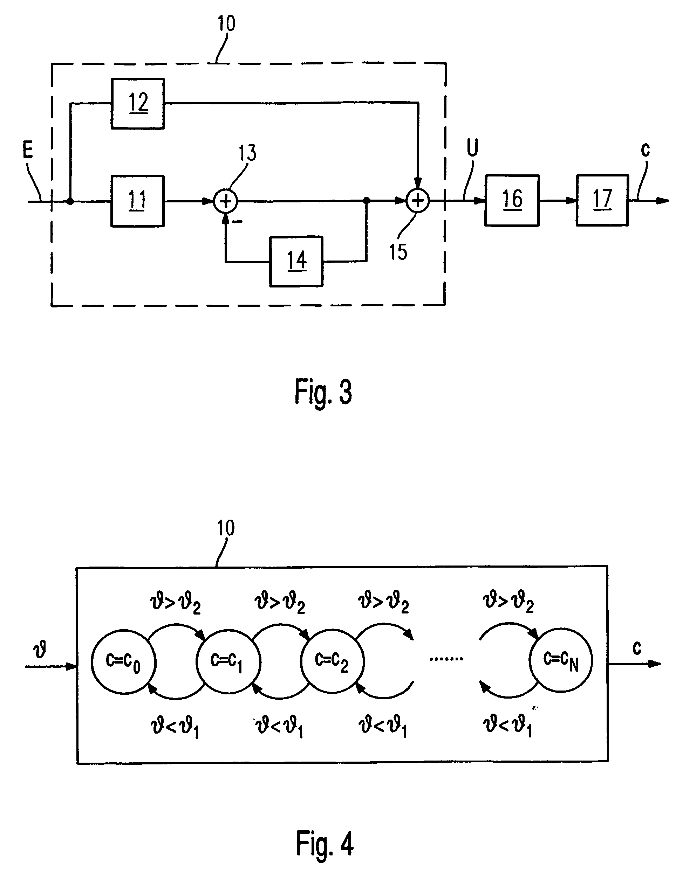

Der Regler 10 kann als Proportional-Integral-Regler ausgelegt sein. Dies ist schematisch in Fig. 3 gezeigt. Ein Integrator 11 und ein Proportional-Verstärker 12 sind parallel geschaltet und werden eingangsseitig von der Größe E gespeist. Die Ausgangssignale des Integrators 11 und des Proportional-Verstärkers 12 werden in einem Summationspunkt 15 aufsummiert, woraus sich die Größe U ergibt. Ferner ist in einer Rückkoppelschleife des Integrationszweigs ein Verzögerungsglied 14 angeordnet, dessen Ausgangssignal über einen Summationspunkt 13 von dem Ausgangssignal des Integrators 11 subtrahiert wird.

Die Größe U wird mittels eines Quantisierers 16 quantisiert. Hierbei sollte die Quantisierung eine Hysterese beinhalten. Anschließend wird die Größe U mittels eines Delogarithmierers 17 delogarithmiert. Als Ergebnis ergibt sich der Skalierungsfaktor c, welcher vorliegend diskrete Werte annimmt.

Das in den Fig. 2 und 3 dargestellte Regelsystem lässt sich mit verschiedenen Variationen realisieren. Die vorstehend beschriebene Logarithmierung/Delogarithmierung kann durch Weglassen des Logarithmierers 7 sowie des Delogarithmierers 17 eingespart werden. Als Folge davon wird der Regelkreis nichtlinear. Ebenso kann der Regler 10 durch Weglassen des Proportional-Verstärkers 12 in ein Integral-Regler umgeformt werden. Ferner kann auch der Quantisierer 16 eingespart werden, was zur Folge hat, dass der Skalierungsfaktor c kontinuierliche Werte annimmt.

In Fig. 4 ist schematisch ein weiteres Ausführungsbeispiel für den Regler 10 dargestellt. Dabei ist der Regler 10 als Zustandsautomat ausgelegt. Der Regler 10 wird vorliegend von dem unlogarithmierten statistischen Parameter $\vartheta$ als Regelgröße gespeist und generiert den Skalierungsfaktor c als Stellgröße, dessen Wertebereich aus einer endlichen Zahl von diskreten Werten $c_1$, $c_2$,..., $c_N$ besteht. Ferner sind dem Regler 10 eine untere Schwelle $\vartheta_1$ und eine obere Schwelle $\vartheta_2$ vorgegeben. Idealerweise soll sich der Wert des statistischen Parameters $\vartheta$ innerhalb des von der unteren Schwelle $\vartheta_1$ und der oberen Schwelle $\vartheta_2$ eingegrenzten Bereichs befinden. Überschreitet der statistische Parameter $\vartheta$ die obere Grenze $\vartheta_2$, so wird für den Skalierungsfaktor c der nächst höhere diskrete Wert gewählt. Unterschreitet der statistische Parameter $\vartheta$ die untere Grenze $\vartheta_1$, geht der Skalierungsfaktor c in den nächst niedrigeren diskreten Wert über.

**Patentansprüche**

1.  Vorrichtung, umfassend:

    - einen Entzerrer zur Ausgabe von entzerrten Datenbits und den entzerrten Datenbits zugeordneten digitalen Soft-Output-Werten ($s_k$), und
    - eine Einrichtung zur Skalierung und Quantisierung der Soft-Output-Werte ($s_k$) des Entzerrers,

    **dadurch gekennzeichnet,**

    - **dass** die Einrichtung eine Regelschleife zur Regelung eines statistischen Parameters (9) der skalierten und quantisierten Soft-Output-Werte ($s_{D,k}$) umfasst, welche umfasst:

        - eine Berechnungseinheit (4) zur Berechnung des statistischen Parameters ($\vartheta$), und
        - eine Regelungseinheit (5, 10) zur Berechnung eines Skalierungsfaktors (c) für die Skalierung der Soft-Output-Werte ($s_k$) des Entzerrers anhand des statistischen Parameters ($\vartheta$).

2.  Vorrichtung nach Anspruch 1,
    **gekennzeichnet durch**

    - eine Skalierungseinheit (2) zur Skalierung der digitalen Soft-Output-Werte ($s_k$) des Entzerrers mit dem Skalierungsfaktor (c).

3.  Vorrichtung nach Anspruch 1 oder 2,
    **gekennzeichnet durch**

    - eine Quantisierungseinheit (3) zur Quantisierung und insbesondere zur Sättigung der skalierten Soft-Output-Werte ($s_k$/c).

4.  Vorrichtung nach einem oder mehreren der vorhergehenden Ansprüche,
    **dadurch gekennzeichnet,**

    - **dass** die Regelungseinheit (10) derart ausgelegt ist, dass sie den statistischen Parameter (Y) auf einen vorgegebenen Wert (W) regelt.

5.  Vorrichtung nach Anspruch 4,
    **dadurch gekennzeichnet,**

    - **dass** die Regelungseinheit (10) einen Integral- oder einen Proportional-Integral-Regler umfasst.

6.  Vorrichtung nach einem oder mehreren der Ansprüche 1 bis 3,
    **dadurch gekennzeichnet,**

    - **dass** die Regelungseinheit (10) derart ausgelegt ist, dass sie den statistischen Parameter ($\vartheta$) in einen vorgegebenen Wertebereich ($\vartheta_1$, $\vartheta_2$) regelt.

7.  Vorrichtung nach Anspruch 6,
    **dadurch gekennzeichnet,**

    - **dass** der Skalierungsfaktor (c) diskrete Werte ($c_1$, $c_2$, ..., $c_N$) annimmt, und
    - **dass** die Regelungseinheit (10) derart ausgelegt ist, dass der Skalierungsfaktor (c) auf den nächst höheren Wert erhöht wird, sofern der statistische Parameter ($\vartheta$) die eine Grenze ($\vartheta_2$) des vorgegebenen Wertebereichs überschreitet, und dass der Skalierungsfaktor (c) auf den nächst kleineren Wert erniedrigt wird, sofern der statistische Parameter ($\vartheta$) die andere Grenze ($\vartheta_1$) des vorgegebenen Wertebereichs überschreitet.

8.  Vorrichtung gemäß Anspruch 3,
    **dadurch gekennzeichnet,**

- **dass** die Berechnungseinheit (4) derart ausgelegt ist, dass sie die skalierten und quantisierten Soft-Output-Werte ($s_{D,k}$) in einem Histogramm aufträgt und daraus den statistischen Parameter ($\vartheta$) berechnet.

9. Vorrichtung nach Anspruch 8,
   **dadurch gekennzeichnet,**

   - **dass** der statistische Parameter ($\vartheta$) der Mittelwert einer vorgegebenen Anzahl von skalierten und quantisierten Soft-Output-Werten ($s_{D,k}$) oder die aus dem Histogramm ermittelbare Bitfehlerwahrscheinlichkeit oder die sich aus dem Histogramm ergebende Häufigkeit des kleinsten und/oder des größten Soft-Output-Werts ($s_{D,k}$) ist.

10. Vorrichtung nach einem oder mehreren der vorhergehenden Ansprüche,
    **gekennzeichnet durch**

    - mindestens eine Berechnungseinheit (7, 17) zur Logarithmierung der Regelgröße ($\vartheta$) und/oder zur Delogarithmierung der Stellgröße (U) der Regelungseinheit (10).

11. Vorrichtung nach einem oder mehreren der vorhergehenden Ansprüche,
    **gekennzeichnet durch**

    - eine Quantisierungseinheit (16) zur Quantisierung des Skalierungsfaktors (c).

12. Mobilfunkempfänger, insbesondere EDGE-Funkempfänger, mit einer Vorrichtung, welche umfasst:

    - einen Entzerrer zur Ausgabe von entzerrten Datenbits und den entzerrten Datenbits zugeordneten digitalen Soft-Output-Werten ($s_k$), und
    - eine Einrichtung zur Skalierung und Quantisierung der Soft-Output-Werte ($s_k$) des Entzerrers,

    **dadurch gekennzeichnet,**

    - **dass** die Einrichtung eine Regelschleife zur Regelung eines statistischen Parameters ($\vartheta$) der skalierten und quantisierten Soft-Output-Werte ($s_{D,k}$) umfasst, welche umfasst:

       - eine Berechnungseinheit (4) zur Berechnung des statistischen Parameters ($\vartheta$), und
       - eine Regelungseinheit (5, 10) zur Berechnung eines Skalierungsfaktors (c) für die Skalierung der Soft-Output-Werte ($s_k$) des Entzerrers anhand des statistischen Parameters ($\vartheta$).

13. Mobilfunkempfänger nach Anspruch 12,
    **dadurch gekennzeichnet,**

    - **dass** die Regelungseinheit (5) bei der Berechnung des Skalierungsfaktors (c) die von dem Mobilfunkempfänger empfangene Signalleistung (p) berücksichtigt.

14. Mobilfunkempfänger nach Anspruch 12 oder 13,
    **dadurch gekennzeichnet,**

    - **dass** der Mobilfunkempfänger einen Analog-Digital-Wandler zur Digitalisierung eines von dem Mobilfunkempfänger empfangenen Empfangssignals und einen dem Analog-Digital-Wandler vorgeschalteten Verstärker mit einer Regelschleife aufweist, und
    - **dass** die Regelungseinheit (5) bei der Berechnung des Skalierungsfaktors (c) die Einstellung (g) der Regelschleife des Verstärkers berücksichtigt.

15. Verfahren, mit den Schritten:

    (a) Erzeugen von entzerrten Datenbits durch Entzerren von empfangenen Signalen; und
    (b) Erzeugen von digitalen Soft-Output-Werten ($s_k$), die den entzerrten Datenbits zugeordnet sind,
    **gekennzeichnet durch** folgende Schritte:
    (c) Skalieren und Quantisieren von Soft-Output-Werten ($s_k$) des Entzerrers;
    (d) Berechnen eines statistischen Parameters ($\vartheta$) der skalierten und quantisierten Soft-Output-Werte ($s_{D,k}$); und

(e) Berechnen eines Skalierungsfaktors (c) für die Skalierung weiterer Soft-Output-Werte ($s_k$) des Entzerrers anhand des statistischen Parameters ($\vartheta$).

**16.** Verfahren nach Anspruch 15,
**dadurch gekennzeichnet,**

- **dass** der Skalierungsfaktor (c) derart berechnet wird, dass der statistische Parameter (Y) bei der Skalierung und Quantisierung der weiteren Soft-Output-Werten ($s_k$) auf einen vorgegebenen Wert (W) geregelt wird.

**17.** Verfahren nach Anspruch 16,
**dadurch gekennzeichnet,**

- **dass** die Regelung mit einem Integral- oder einen Proportional-Integral-Regler durchgeführt wird.

**18.** Verfahren nach Anspruch 15,
**dadurch gekennzeichnet,**

- **dass** der Skalierungsfaktor (c) derart berechnet wird, dass der statistische Parameter (9) bei der Skalierung und Quantisierung der weiteren Soft-Output-Werten ($s_k$) in einen vorgegebenen Wertebereich ($\vartheta_1, \vartheta_2$) geregelt wird.

**19.** Verfahren nach Anspruch 18,
**dadurch gekennzeichnet,**

- **dass** der Skalierungsfaktor (c) diskrete Werte ($c_1, c_2,..., c_N$) annimmt, und
- **dass** der Skalierungsfaktor (c) auf den nächst höheren Wert erhöht wird, sofern der statistische Parameter ($\vartheta$) die eine Grenze ($\vartheta_2$) des vorgegebenen Wertebereichs überschreitet, und dass der Skalierungsfaktor (c) auf den nächst kleineren Wert erniedrigt wird, sofern der statistische Parameter ($\vartheta$) die andere Grenze ($\vartheta_1$) des vorgegebenen Wertebereichs überschreitet.

**20.** Verfahren nach einem oder mehreren der Ansprüche 15 bis 19,
**dadurch gekennzeichnet,**

- **dass** die skalierten und quantisierten Soft-Output-Werte ($s_{D,k}$) in einem Histogramm aufgetragen werden, und
- **dass** aus dem Histogramm der statistische Parameter ($\vartheta$) berechnet wird.

**21.** Verfahren nach Anspruch 20,
**dadurch gekennzeichnet,**

- **dass** der statistische Parameter ($\vartheta$) der Mittelwert einer vorgegebenen Anzahl von skalierten und quantisierten Soft-Output-Werten ($s_{D,k}$) oder die aus dem Histogramm ermittelbare Bitfehlerwahrscheinlichkeit oder die sich aus dem Histogramm ergebende Häufigkeit des kleinsten und/oder des größten Soft-Output-Werts ($s_{D,k}$) ist.

**22.** Verfahren nach einem oder mehreren der Ansprüche 16 bis 21,
**dadurch gekennzeichnet,**

- **dass** bei der Regelung die Regelgröße (Y) und/oder die Stellgröße (U) logarithmiert werden.

**23.** Verfahren nach einem oder mehreren der Ansprüche 15 bis 22,
**dadurch gekennzeichnet,**

- **dass** der Skalierungsfaktor (c) quantisiert wird.

**24.** Verwendung des Verfahrens nach einem oder mehreren der Ansprüche 15 bis 23 in einem Mobilfunkempfänger, insbesondere einem EDGE-Funkempfänger.

**Claims**

1.  Apparatus comprising:

    - an equalizer for outputting equalized data bits and digital soft output values ($s_k$) associated with the equalized data bits, and
    - a device for scaling and quantization of the soft output values ($s_k$) from the equalizer,

    **characterized**

    - **in that** the device comprises a control loop for controlling a statistical parameter ($\theta$) for the scaled and quantized soft output values ($s_{D,k}$), which comprises:
    - a calculation unit (4) for calculation of the statistical parameter ($\theta$), and
    - a control unit (5, 10) for calculation of a scaling factor (c) for scaling the soft output values ($s_k$) from the equalizer on the basis of the statistical parameter ($\theta$).

2.  Apparatus according to claim 1,
    **characterized by**

    - a scaling unit (2) for scaling the digital soft output values ($s_k$) from the equalizer by the scaling factor (c).

3.  Apparatus according to claim 1 or 2,
    **characterized by**

    - a quantization unit (3) for quantization and in particular for saturation of the scaled soft output values ($s_k/c$).

4.  Apparatus according to one or more of the preceding claims,
    **characterized**

    - **in that** the control unit (10) is designed such that it regulates the statistical parameter (Y) at a predetermined value (W).

5.  Apparatus according to claim 4,
    **characterized**

    - **in that** the control unit (10) comprises an integral regulator or a proportional-integral regulator.

6.  Apparatus according to one or more of claims 1 to 3,
    **characterized**

    - **in that** the control unit (10) is designed such that it regulates the statistical parameter ($\theta$) to a predetermined value range ($\theta_1$, $\theta_2$).

7.  Apparatus according to claim 6,
    **characterized**

    - **in that** the scaling factor (c) assumes discrete values ($c_1$, $c_2$,...,$c_N$), and
    - **in that** the control unit (10) is designed such that the scaling factor (c) is increased to the next higher value when the statistical parameter ($\theta$) exceeds one limit ($\theta_2$) of the predetermined value range, and in that the scaling factor (c) is reduced to the next smaller value when the statistical parameter ($\theta$) exceeds the other limit ($\theta_1$) of the predetermined value range.

8.  Apparatus according to claim 3,
    **characterized**

    - **in that** the calculation unit (4) is designed such that it plots the scaled and quantized soft output values ($s_{D,k}$) on a histogram, and uses this to calculate the statistical parameter ($\theta$).

9. Apparatus according to claim 8,
   **characterized**

   - **in that** the statistical parameter ($\theta$) is the mean value of a predetermined number of scaled and quantized soft output values ($s_{D,k}$) or is the bit error probability which can be determined from the histogram, or is the frequency of occurrence of the smallest and/or of the highest soft output value ($s_{D,k}$) which results from the histogram.

10. Apparatus according to one or more of the preceding claims,
    **characterized by**

    - at least one calculation unit (7, 17) for converting the controlled variable ($\theta$) to logarithmic form, and/or for converting the manipulated variable (U) back from logarithmic form for the control unit (10).

11. Apparatus according to one or more of the preceding claims,
    **characterized by**

    - a quantization unit (16) for quantization of the scaling factor (c).

12. Mobile radio receiver, in particular EDGE radio receiver, having an apparatus which comprises:

    - an equalizer for outputting equalized data bits and digital soft output values ($s_k$) associated with the equalized data bits, and
    - a device for scaling and quantization of the soft output values ($s_k$) from the equalizer,

    **characterized**

    - **in that** the device comprises a control-loop for controlling a statistical parameter ($\theta$) for the scaled and quantized soft output values ($s_{D,k}$), which comprises:
    - a calculation unit (4) for calculation of the statistical parameter ($\theta$), and
    - a control unit (5, 10) for calculation of a scaling factor (c) for scaling the soft output values ($s_k$) from the equalizer on the basis of the statistical parameter ($\theta$).

13. Mobile radio receiver according to claim 12,
    **characterized**

    - **in that** the control unit (5) takes account of the signal power (p) received by the mobile radio receiver in the calculation of the scaling factor (c).

14. Mobile radio receiver according to claim 12 or 13,
    **characterized**

    - **in that** the mobile radio receiver has an analog/digital converter for digitization of a received signal received from the mobile radio receiver, and has an amplifier, which is connected upstream of the analog/digital converter, with a control loop, and
    - **in that** the control unit (5) takes account of the setting (g) of the control loop for the amplifier in the calculation of the scaling factor (c).

15. Method having the following steps:

    (a) generation of equalized data bits by equalizing received signals; and
    (b) generation of digital soft -output values ($s_k$) which are associated with the equalized data bits,
    **characterized by** the following steps:
    (c) scaling and quantization of soft output values ($s_k$) from the equalizer;
    (d) calculation of a statistical parameter ($\theta$) for the scaled and quantized soft output values ($s_{D,k}$); and
    (e) calculation of a scaling factor (c) for the scaling of further soft output values ($s_k$) from the equalizer on the basis of the statistical parameter ($\theta$).

**16.** Method according to claim 15,
**characterized**

- **in that** the scaling factor (c) is calculated such that the statistical parameter (Y) is regulated at a predetermined value (W) during the scaling and quantization of the further soft output values ($s_k$).

**17.** Method according to claim 16,
**characterized**

- **in that** the control process is carried out by means of an integral regulator or a proportional-integral regulator.

**18.** Method according to claim 15,
**characterized**

- **in that** the scaling factor (c) is calculated in such a way that the statistical parameter ($\theta$) is regulated to a predetermined value range ($\theta_1$, $\theta_2$). during the scaling and quantization of the further soft output values ($s_k$).

**19.** Method according to claim 18,
**characterized**

- **in that** the scaling factor (c) assumes discrete values ($c_1$, $c_2$, ..., $c_N$), and
- **in that** the scaling factor (c) is increased to the next higher value when the statistical parameter ($\theta$) exceeds one limit ($\theta_2$) of the predetermined value range, and in that the scaling factor (c) is reduced to the next smaller value when the statistical parameter ($\theta$) exceeds the other limit ($\theta_1$) of the predetermined value range.

**20.** Method according to one or more of claims 15 to 19,
**characterized**

- **in that** the scaled and quantized soft output values ($s_{D,k}$) are plotted on a histogram, and
- **in that** the statistical parameter ($\theta$) is calculated from the histogram.

**21.** Method according to claim 20,
**characterized**

- **in that** the statistical parameter ($\theta$) is the mean value of a predetermined number of scaled and quantized soft output values ($s_{D,k}$) or is the bit error probability which can be determined from the histogram, or is the frequency of occurrence of the smallest and/or of the highest soft output value ($s_{D,k}$) which results from the histogram.

**22.** Method according to one or more of claims 16 to 21,
**characterized**

- **in that** the controlled variable (Y) and/or the manipulated variable (U) are converted to logarithmic form for the control process.

**23.** Method according to one or more of claims 15 to 22,
**characterized**

- **in that** the scaling factor (c) is quantized.

**24.** Use of the method according to one or more of claims 15 to 23 in a mobile radio receiver, in particular in an EDGE radio receiver.

**Revendications**

**1.** Dispositif, comprenant :

- un égaliseur d'émission de bits de données corrigés et de valeurs ( $S_K$ ) de sortie logicielles numériques associées aux bits de données corrigés et
- un dispositif de mise à l'échelle et de quantification des valeurs ( $S_K$ ) de sortie logicielles de l'égalisateur,

**caractérisé en ce que**

- le dispositif comprend une boucle de régulation d'un paramètre ( $\vartheta$ ) statistique des valeurs ( $S_{D,K}$ ) de sortie logicielles mises à l'échelle et quantifiées, qui comprend :

- une unité ( 4 ) de calcul du paramètre ( $\vartheta$ ) statistique et
- une unité ( 5, 10 ) de régulation pour le calcul d'un facteur ( C ) de mise à l'échelle pour la mise à l'échelle des valeurs ( $S_K$ ) de sortie logicielles de l'égalisateur au moyen du paramètre ( $\vartheta$ ) statistique.

**2.** Dispositif suivant la revendication 1,
**caractérisé par**

- une unité ( 2 ) de mise à l'échelle des valeurs ( $S_K$ ) de sortie logicielles numériques de l'égalisateur par le facteur ( C ) de mise à l'échelle.

**3.** Dispositif suivant la revendication 1 ou 2,
**caractérisé par**

- une unité ( 3 ) de quantification pour quantifier et notamment pour saturer les valeurs ( $S_K/C$ ) de sortie logicielles mises à l'échelle.

**4.** Dispositif suivant l'une ou plusieurs des revendications précédentes,
**caractérisé en ce que**

- l'unité ( 10 ) de régulation est conçue de manière à ce qu'elle règle le paramètre ( Y ) statistique sur une valeur ( W ) prescrite.

**5.** Dispositif suivant la revendication 4,
**caractérisé en ce que**

- l'unité ( 10 ) de régulation comprend un régulateur intégral ou un régulateur proportionnel-intégral.

**6.** Dispositif suivant l'une ou plusieurs des revendications 1 à 3,
**caractérisé en ce que**

- l'unité ( 10 ) de régulation est conçue de manière à ce qu'elle règle le paramètre ( $\vartheta$ ) statistique dans une plage ( $\vartheta_1$, $\vartheta_2$ ) de valeurs prescrites.

**7.** Dispositif suivant la revendication 6,
**caractérisé**

- **en ce que** le facteur ( C ) de mise à l'échelle prend des valeurs ( $C_1$, $C_2$, ..., $C_N$ ) discrètes, et
- **en ce que** l'unité ( 10 ) de régulation est conçue de sorte que le facteur ( C ) de mise à l'échelle est porté à la valeur immédiatement plus haute dès que le paramètre ( $\vartheta$ ) statistique dépasse une limite ( $\vartheta_2$ ) de la plage de valeurs prescrites et en ce que le facteur ( C ) de mise à l'échelle est abaissé à la valeur immédiatement plus petite dès que le paramètre ( $\vartheta$ ) statistique dépasse l'autre limite ( $\vartheta_1$ ) de la plage de valeurs prescrites.

**8.** Dispositif suivant la revendication 3,
**caractérisé en ce que**

- l'unité ( 4 ) de calcul est conçue de manière à ce qu'elle porte les valeurs ( $S_{D,K}$ ) de sortie logicielles mises à l'échelle et quantifiées dans un histogramme et en calcule le paramètre ( $\vartheta$ ) statistique.

**9.** Dispositif suivant la revendication 8,

**caractérisé en ce que**

- **en ce que** le paramètre ( $\vartheta$ ) statistique est la valeur moyenne d'un nombre prescrit de valeurs ( $S_{D,K}$ ) de sortie logicielles mises à l'échelle et quantifiées ou la probabilité d'erreur de bit pouvant être déterminée à partir de l'histogramme ou la fréquence provenant de l'histogramme de la valeur ( $S_{D,K}$ ) de sortie logicielle la plus petite et/ou la plus grande.

10. Dispositif suivant l'une ou plusieurs des revendications précédentes,
   **caractérisé par**

   - au moins une unité ( 7, 17 ) de calcul pour calculer le logarithme de la grandeur ( $\vartheta$ ) réglée et/ou pour délogarithmer la grandeur ( U ) réglante de l'unité ( 10 ) de régulation.

11. Dispositif suivant l'une ou plusieurs des revendications précédentes,
   **caractérisé par**

   - une unité ( 16 ) de quantification du facteur ( C ) de mise à l'échelle.

12. Radiorécepteur mobile, notamment radiorécepteur EDGE ayant un dispositif qui comprend :

   - un égalisateur d'émission des bits de données corrigés et de valeurs ( $S_K$ ) de sortie logicielles numériques associées aux bits de données corrigés et
   - un dispositif de mise à l'échelle et de quantification des valeurs ( $S_K$ ) de sortie logicielles de l'égalisateur,

   **caractérisé**

   - **en ce que** le dispositif comprend une boucle de régulation d'un paramètre ( $\vartheta$ ) statistique des valeurs ( $S_{D,K}$ ) de sortie logicielles mises à l'échelle et quantifiées, qui comprend :

      - une unité ( 4 ) de calcul du paramètre ( $\vartheta$ ) statistique et
      - une unité ( 5, 10 ) de régulation pour le calcul d'un facteur ( C ) de mise à l'échelle pour la mise à l'échelle des valeurs ( $S_K$ ) de sortie logicielles de l'égalisateur au moyen du paramètre ( $\vartheta$ ) statistique.

13. Radiorécepteur mobile suivant la revendication 12,
   **caractérisé**

   - **en ce que** l'unité ( 5 ) de régulation tient compte, lors du calcul du facteur ( C ) de mise à l'échelle, de la puissance ( p ) du signal reçu par le radiorécepteur mobile.

14. Radiorécepteur mobile suivant la revendication 12 ou 13,
   **caractérisé**

   - **en ce que** le radiorécepteur mobile comporte un convertisseur analogique-numérique pour numériser un signal de réception reçu par le radiorécepteur mobile et un amplificateur monté en amont du convertisseur analogique-numérique et ayant une boucle de régulation et
   - **en ce que** l'unité ( 5 ) de régulation tient compte, lors du calcul du facteur ( C ) de mise à l'échelle, du réglage ( g ) de la boucle de régulation de l'amplificateur.

15. Procédé, ayant les stades dans lesquels :

   ( a ) on produit des bits de données corrigés par correction de signaux reçus et
   ( b ) on produit des valeurs ( $S_K$ ) de sortie logicielles numériques qui sont associées aux bits de données corrigés,
   **caractérisé par** les stades suivants dans lesquels:
   ( c ) on met à l'échelle et on quantifie des valeurs ( $S_K$ ) de sortie logicielles de l'égalisateur ;
   ( d ) on calcule un paramètre ( $\vartheta$ ) statistique des valeurs ( $S_{D,K}$ ) de sortie logicielles mises à l'échelle et quantifiées et
   ( e ) on calcule un facteur ( C ) de mise à l'échelle pour la mise à l'échelle d'autres valeurs ( $S_K$ ) de sortie logicielles de l'égalisateur au moyen du paramètre ( $\vartheta$ ) statistique.

**16.** Procédé suivant la revendication 15,
**caractérisé en ce que**

- l'on calcule le facteur ( C ) de mise à l'échelle de façon à régler le paramètre ( Y ) statistique lors de la mise à l'échelle et de la quantification des autres valeurs ( $S_K$ ) de sortie logicielles à une valeur ( W ) prescrite.

**17.** Procédé suivant la revendication 16,
**caractérisé en ce que**

- l'on effectue la régulation par un régulateur intégral ou par une régulateur proportionnel-intégral.

**18.** Procédé suivant la revendication 15,
**caractérisé en ce que**

- l'on calcule le facteur ( C ) de mise à l'échelle de manière à régler le paramètre ( $\vartheta$ ) statistique lors de la mise à l'échelle et de la quantification des autres valeurs ( $S_K$ ) de sortie logicielles dans une plage ( $\vartheta_1$, $\vartheta_2$ ) de valeurs prescrites.

**19.** Procédé suivant la revendication 18,
**caractérisé**

- **en ce que** le facteur ( C ) de mise à l'échelle prend des valeurs ( $C_1$, $C_2$, ..., $C_N$ ) discrètes et
- **en ce que** l'on porte le facteur ( C ) de mise à l'échelle à la valeur immédiatement plus haute dès que le paramètre ( $\vartheta$ ) statistique dépasse une limite ( $\vartheta_2$ ) de la plage de valeurs prescrites et en ce que l'on abaisse le facteur ( C ) de mise à l'échelle à la valeur immédiatement plus petite dès que le paramètre ( $\vartheta$ ) statistique dépasse l'autre valeur ( $\vartheta_1$ ) de la plage de valeurs prescrites.

**20.** Procédé suivant l'une ou plusieurs des revendications 15 à 19,
**caractérisé**

- **en ce que** l'on porte les valeurs ( $S_{D,K}$ ) de sortie logicielles mises à l'échelle et quantifiées dans un histogramme et
- **en ce que** l'on calcule le paramètre ( $\vartheta$ ) statistique à partir de l'histogramme.

**21.** Procédé suivant la revendication 20,
**caractérisé**

- **en ce que** le paramètre ( $\vartheta$ ) statistique est la valeur moyenne d'un nombre prescrit de valeurs ( $S_{D,K}$ ) de sortie logicielles mises à l'échelle et quantifiées ou la probabilité d'erreur de bit pouvant être déterminée à partir de l'histogramme ou la fréquence provenant de l'histogramme de la valeur ( $S_{D,K}$ ) de sortie logicielle la plus petite et/ou la plus grande.

**22.** Procédé suivant l'une ou plusieurs des revendications 16 à 21,
**caractérisé**

- **en ce que**, lors de la régulation, on prend le logarithme de la grandeur ( Y ) à régler et/ou de la grandeur ( U ) réglante.

**23.** Procédé suivant l'une ou plusieurs des revendications 15 à 22,
**caractérisé en ce que**

- l'on quantifie le facteur ( C ) de mise à l'échelle.

**24.** utilisation du procédé suivant l'une ou plusieurs des revendications 15 à 23 dans un radiorécepteur mobile, notamment dans un radiorécepteur EDGE.

$s_k$

$s_k/c$

$s_{D,k}$

| 1 | → | 2 | → | 3 | →

c

$\vartheta$

p →

g →

| 5 | ← $\vartheta$ ← | 4 |

## Fig. 1

$s_k$

$\vartheta_0$

Z

→ | 6 | → | 7 |

9

8

Y

W

− | 10 | → ⊕ | 8 | → Y

E

U

## Fig. 2

Fig. 3

Fig. 4

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6347124 B1

**In der Beschreibung aufgeführte Nicht-Patentliteratur**

- **Y. K. LEE ; H. LOU.** Normalization, windowing and quantization of soft-decision Viterbi decoder inputs in CDMA systems. *VEHICULAR TECHNOLOGY CONFERNCE,* 1999, 221-225

- **G. MONTORSI ; S. BENEDETTO.** Design of Fixed-Point Iterative Decoders for Concatenated Codes with Interleavers. *IEEE JOURNAL ON SELECTED AREAS IN COMMUNICATIONS,* 2001, vol. 19, 871-882